# EUROPÄISCHE PATENTSCHRIFT

(11) **EP 0 642 593 B1**
(45) Veröffentlichungstag und Bekanntmachung des Hinweises auf die Patenterteilung: **27.12.1995**
(21) Anmeldenummer: 93912714.8
(22) Anmeldetag: 18.05.1993
(51) Int. Cl.: C13F 1/00

(54) **VERWENDUNG VON KONDENSATEN DER ASPARAGINSÄURE ALS BELAGSVERHINDERER BEI DER EINDAMPFUNG VON ZUCKERSÄFTEN**
USE OF CONDENSATION PRODUCTS OF ASPARTIC ACID AS DEPOSIT-PREVENTION AGENTS IN THE CONCENTRATION OF SUGAR JUICES
UTILISATION DE CONDENSATS D'ACIDE ASPARTIQUE COMME AGENTS ANTI-DEPOT LORS DE LA CONCENTRATION DE JUS DE SUCRE

(30) Priorität: 29.05.1992 DE 4217847
(43) Veröffentlichungstag der Anmeldung: 15.03.1995
(73) Patentinhaber: BASF Aktiengesellschaft, 67063 Ludwigshafen (DE)
(72) Erfinder: KRONER, Matthias, D-6719 Eisenberg (DE); HARTMANN, Heinrich, D-6703 Limburgerhof (DE); POTTHOFF-KARL, Birgit, D-6700 Ludwigshafen (DE); BUECHNER, Karl-Heinz, D-6822 Altlussheim (DE)
(86) Internationale Anmeldenummer: EP9301235
(87) Internationale Veröffentlichungsnummer: WO9324661

(56) Entgegenhaltungen:
- EP-A- 0 391 629
- DE-A- 2 253 190
- DE-A- 3 612 102
- DE-A- 3 626 672
- DE-A- 3 921 912
- US-A- 4 534 881
- US-A- 4 868 287
- US-A- 5 116 513
- NATURE Bd. 190 , 1961 , LONDON GB J.KOVACS ET AL. 'Polypeptide formation from asparagine under hypothtically primitive conditions' in der Anmeldung erwähnt
- NATURE Bd. 163 , 1949 , LONDON GB Seiten 213 - 214 M.FRANKEL ET AL. 'Synthesis of poly-aspartic acid' in der Anmeldung erwähnt
- JOURNAL OF ORGANIC CHEMISTRY Bd. 26 , 1961 , EASTON US Seiten 1084 - 1091 J.KOVACS ET AL. 'Chemical studies on polyaspartic acids' in der Anmeldung erwähnt
- JOURNAL OF MEDICINAL CHEMISTRY Bd. 16, Nr. 8 , 1972 , WASHINGTON US Seiten 893 - 897 P.NERI ET AL. 'Synthesis of alpha,betapoly ((2-hydroxyethyl)-dl-aspartamide),a new plasma expander' in der Anmeldung erwähnt
- ARCHIVES OF BIOCHEMISTRY AND BIOPHYSICS Bd. 86, Nr. 2 , Februar 1960 , NEW YORK Seiten 28 - 285 S.W.FOX ET AL. 'Thermal copolymerisation of amino acids in the presence of phosphoric acid' in der Anmeldung erwähnt
- THE JOURNAL OF AMERICAN CHEMICAL SOCIETY Bd. 80 , 1958 , EASTON,PA Seiten 2694 - 2697 K.HARADA ET AL. 'The termal condensation of glutamic acid and glycine to linear peptides' in der Anmeldung erwähnt

## Beschreibung

Die Erfindung betrifft die Verwendung von Kondensaten der Asparaginsäure als Belagsverhinderer bei der Eindampfung von Zuckersäften.

Bei der Herstellung von Zucker aus Zuckerrohr oder aus -rüben wird der durch Extraktion des pflanzlichen Materials erhaltene wäßrige Saft vor dem Eindampfen von Zuckerbegleitstoffen durch Zusatz von Calciumhydroxid befreit. Das überschüssige Calciumhydroxid muß anschließend entfernt werden. Es kann entweder durch Einleiten von Kohlendioxid in die Zucker enthaltende wäßrige Lösung oder auch durch Zugabe von Phosphorsäure ausgefällt werden. Im Zuckersaft verbleiben jedoch stets gelöste Anteile an Calciumcarbonat bzw. -phosphat. Die schwer löslichen Calciumsalze fallen dann während des Eindampfens des Zuckerdünnsaftes aus und verursachen Betriebsstörungen. Sofern der Zuckersaft gebleicht wird, z. B. mit Hilfe von Schwefeldioxid oder durch Zugabe von Sulfiten, bilden sich ebenfalls schwer lösliche Calciumsalze, nämlich Calciumsulfit bzw. -sulfat, die nicht quantitativ aus dem Zuckerdünnsaft entfernt werden können und somit zur Belagsbildung beim Eindampfen beitragen. Während des Eindampfens des Zuckerdünnsaftes im Temperaturbereich von über 100 bis etwa 110°C entstehen in den mit Calciumhydroxid behandelten Zuckersäften ferner Calciumoxalat und -silikat. Der Zuckersaft enthält außerdem amorphe Kieselsäure. Die genannten Stoffe scheiden sich beim Eindampfen der wäßrigen Zuckersaftlösungen in Form von harten, steinartigen Belägen auf Anlagenbauteilen, insbesondere Wärmeaustauscheroberflächen, ab. Stärkere Belagsbildungen in den Verdampfungseinrichtungen bedingen einen häufigen Stillstand der Anlagen, weil die Beläge in zeitraubenden Reinigungsoperationen entfernt werden müssen.

Um die Ausfällung von Manganionen aus wäßriger Lösung zu inhibieren, fügt man gemäß der Lehre der US-PS 4 552 665 zu einer wäßrigen Lösung, die Manganionen enthält, 0,1 - 20 ppm eines Copolymerisates aus Acrylsäure und 2-Acrylamido-2-methyl-propansulfonsäure eines Molekulargewichts von vorzugsweise weniger als 25 000 und insbesondere unterhalb von 10 000. Die Copolymerisate wirken als Inhibitor in Kühlsystemen, bei der Boilerwasserbereitung, der umgekehrten Osmose und bei der Eindampfung von Zuckersäften.

Aus der DE-PS 30 27 236 sind Terpolymerisate bekannt, die erhältlich sind durch Copolymerisation von 2-Acrylamido-2-methylpropansulfonsäure, Acrylamid und Acrylsäure in wäßriger Lösung in Gegenwart von Radikalbildnern. Diese Copolymerisate haben Molekulargewichte zwischen 500 und 20 000, vorzugsweise zwischen 1000 und 10 000. Sie werden gegebenenfalls nach vollständiger oder teilweiser Neutralisation, zur Verhinderung von Inkrustationen bei gleichzeitigem Korrosionsschutz in wasserführenden Systemen verwendet, z. B. in Kühl- und Warmwasserkreisläufen, Koch- und Verdampfstationen, Wärmetauschern, Turbinen und Pumpen. Die Terpolymerisate werden in Mengen von wenigstens 2 ppm eingesetzt.

Wie oben dargelegt, treten insbesondere bei der Eindampfung von Zuckersäften chemisch unterschiedlich zusammengesetzte Belagsarten auf, für deren Inhibierung bisher keine universell einsetzbaren Produkte zur Verfügung stehen. Im Gegensatz zu Belägen, die sich in Koch- und Verdampferstationen zur Dampferzeugung, bei der Meerwasserdestillation sowie in Boilern bilden, entstehen bei der Eindampfung von Zuckersäften Beläge, die insbesondere schwerlösliche Calciumsalze organischer Säuren sowie amorphe Kieselsäure enthalten. Ferner werden diese Beläge verstärkt durch organische Zersetzungsprodukte des Zuckers. Die zur Eindampfung kommenden Zuckersäfte weisen, bedingt durch den Prozeß der Saftreinigung, sehr hohe Konzentrationen an Calciumionen, sowie Carbonat-, Sulfat-, Oxalat- und Silicationen auf. Daher sind übliche Belagsverhinderer, die zur Konditionierung von z. B. Kühlwasser, Boilerwasser, Prozeßwasser sowie in der Meerwasserentsalzung eingesetzt werden, nur sehr unzureichend wirksam.

Bisher wurden zur Verhinderung der Bildung von Belägen, Niederschlägen und Verkrustungen anorganischer Salze beim Eindampfen von Zuckersäften synthetische Polynatriumacrylate mit Molmassen um 1200 verwendet. Diese Polycarboxylate gelangen mit dem Abwasser in Kläranlagen und sind dort nicht biologisch abbaubar. Die adsorptive Bindung an den Klärschlamm ist oft nicht ausreichend. Desweiteren kann nicht ausgeschlossen werden, daß durch Adsorption an die ausfallenden Zuckerkristalle geringe Mengen der Polycarboxylate zum menschlichen Verzehr gelangen.

Polyasparaginsäure und Kondensate der Asparaginsäure mit anderen Aminosäuren sind bekannt.

So wird beispielsweise in Nature, Band 163, 213 (1949) beschrieben, daß sich beim Erhitzen von Asparaginsäure auf 200°C hochmolekulare Kondensationsprodukte bilden. Aus Journal of the American Chemical Society, Band 74, Seiten 5304 und 5307 (1952) ist die thermische Polykondensation von Asparaginsäure/Glutaminsäuremischungen in Gegenwart von Phosphorsäure bekannt.

In Arch.Biochem.Biophys. Band 86, 281-285 (1960) wird die Polykondensation von Aminosäuremischungen, bestehend aus 2 Teilen Glutaminsäure, 2 Teilen Asparaginsäure und einem Teil einer Mischung aus anderen Aminosäuren in Gegenwart von Phosphorsäure bei Temperaturen über 100°C beschrieben. Es werden Proteinoide erhalten, die mit steigender Kondensationstemperatur steigende Ausbeuten und höheres Molgewicht besitzen. Die Proteinoide enthalten 10 bis 30 mol% Glutaminsäureeinheiten einkondensiert. Die Glutaminsäureeinheiten befinden sich hauptsächlich an den Kettenenden. Die erreichbaren Molmassen liegen bei 35000.

Durch rein thermische Behandlung von Glutaminsäure bildet sich gemäß Journal of the American Chemical Society, Band 80, Seite 2694 (1958) nahezu quantitativ Pyroglutaminsäure, die zur Polykondensation nicht fähig ist. Durch Copolykondensation von Glutaminsäure und anderen Aminosäuren sind jedoch Polykondensate herstellbar, die Glutaminsäureeinheiten einkondensiert enthalten.

In Nature, Band 190, Seite 531 (1961) und Polym. Bull., Band 1 (1978), 3, 177-180 wird die thermische Polykondensation von L-Asparagin und Isoasparagin in siedendem Wasser beschrieben. Es bilden sich Polyasparaginsäuren mit mittleren Molmassen bis zu 3000.

In Journal of Organic Chemistry, Band 26, 1084 (1961) wird die Polykondensation von N-Acetylasparaginsäure bei 145-200°C unter Abspaltung von Wasser und Essigsäure beschrieben. Es bildet sich ein glasiger Festkörper, der als Polyaspartimid identifiziert worden ist. In dieser Literaturstelle wird auch die Polykondensation des Hydrobromids des Asparaginsäureanhydrid in Pyridin beschrieben.

Eine Methode unter Verwendung von Phosphorsäure zur Polykondensation der DL-Asparaginsäure wird von Neri in Journal of Medicinal Chemistry, Vol. 16, 893-897 (1972) beschrieben. Bei einem Molverhältnis von Phosphorsäure/Asparaginsäure von 0,6 wird ein Polyaspartimid erhalten, das als Lösung in Dimethylformamid eine reduzierte Viskosität von 45 ml/g besitzt. Durch Umsetzung mit Ethanolamin wird eine modifizierte Polyasparaginsäure erhalten, die als Plasmaexpander geeignet ist.

Durch thermische Polykondensation erhaltene Polyasparaginsäuren sind als Korrosionsinhibitoren für Stahl geeignet, vgl. Surface Reactive Peptides and Polymers, C.S. Sikes und A.P. Wheeler, Dallas, 1989, ACS Symposium Series 444, Washington 1991, Kapitel 21.

Die Verwendung von biologisch abbaubaren Polymeren als Additive in der Wasserbehandlung wird als ökologisch erfolgversprechende Alternative für die rein synthetischen Polymeren beurteilt, vgl. US-A-4 534 881 sowie Beiträge von Sikes und Wheeler in Chemical Aspects of Regulation of Mineralization, Univ. S. Alabama Publ. Services, Mobile, 1988, Seiten 15-20 und in Surface Reactive Peptides and Polymers (siehe oben).

Für die Verhinderung mineralischer Abscheidungen werden in der US-A-4 868 287 polyanlonische und hydrophob modifizierte Peptide mit Blockstrukturen beschrieben. Beispielsweise besteht ein Block aus 15 Asparaginsäureeinheiten und ist mit einem Block aus 8 Alanineinheiten verbunden. Das kleinste wirksame Peptid besteht aus 5 Einheiten, von denen 2 aus der Gruppe der ionischen Aminosäuren zu wählen sind. Beide Blöcke sollen zusammen 120 Einheiten nicht überschreiten.

In der US-A-4 534 881 wird die Inhibierung von anorganischen oder biologischen Calciumcarbonatausfällungen durch Polyaspartat, Polyglutamat und Copolykondensaten mit anderen Aminosäuren beschrieben, die ein bevorzugtes Molgewicht von 3500 bis 10000 besitzen. Die Polyaminosäuren werden beispielsweise in Meerwasseraufbereitungsanlagen oder Kühlkreisläufen als Scaleinhibitor verwendet.

Durch thermische Polykondensation von Maleinsäuremonoammoniumsalz entsteht gemäß DE-A-3 626 672 ein Polykondensat, das als Poly-DL-aspartat identifiziert wird und in der sauren Form die Ablagerungen der Härtebildner des Wassers verhindern und Ablagerungen dieser Art wieder auflösen kann. Das Polyaspartat kann in Geschirrspülmaschinen das Mattwerden von Glas verhindern.

Aus der DE-A-2 253 190 ist bekannt, daß mit langkettigen Alkylaminen modifizierte Polyasparaginsäuren als Tenside in Waschmitteln verwendet werden.

Aufgrund der physiologischen Verträglichkeit und der biokompatiblen Eigenschaften werden Ester der Polyasparaginsäure mit Ethanolaminen als Blutplasmaexpander eingesetzt (Journal of Polymer Science, Polymer Symposium, Band 66, 59-64 (1979) . Gemäß der DE-A-36 12 102 werden wasserlösliche und biologisch abbaubare Mischpolymerisate zur Bindung von biologisch aktiven Stoffen, die in der Hauptkette Asparaginsäureeinheiten und Einheiten anderer Aminosäuren enthalten, verwendet. Gemäß den Angaben in der DE-A-39 21 912 werden biologisch verträgliche Polyasparaginsäurederivate hergestellt und als pharmazeutische und lebensmitteltechnische Zubereitungen verwendet. Neri beschreibt in Journal of Medicinal Chemistry, Band 16, 893-897 (1973) Poly-(Hydroxyethyl)-aspartat als biologisch gut verträgliches Derivat der Polyasparaginsäure und die Verwendung der Polymeren als Plasmaexpander.

Aufgabe der Erfindung ist es, Belagsverhinderer für Verfahren zur Eindampfung von Zuckersäften zur Verfügung zu stellen, die biologisch abbaubar und in Nahrungsmitteln unbedenklich sind.

Die Aufgabe wird erfindungsgemäß gelöst mit der Verwendung von Polyasparaginsäure und Kondensaten, die mindestens 60 mol% Asparaginsäure und bis zu 40 mol% andere Aminosäuren einkondensiert enthalten, sowie den Alkali- und Ammoniumsalzen der Polyasparaginsäure und der genannten Kondensate als Belagsverhinderer bei der Eindampfung von Zuckersäften.

Als Ausgangsmaterial für die Herstellung von Polyasparaginsäure und den Asparaginsäure einkondensiert enthaltenden Reaktionsprodukten kann L-, D- und DL-Asparaginsäure verwendet werden. DL-Asparaginsäure ist technisch leicht zugänglich, z.B. durch Umsetzung von Ammoniak mit Maieinsäure oder Fumarsäure unter Druck. L-Asparaginsäure wird durch asymmetrische L-Aspartase katalysierte Addition von Ammoniak an Fumarsäure hergestellt. Geeignete Mikroben für die industrielle Biokonversion von Fumarsäure in L-Asparaginsäure beinhalten mutierte Stämme von beispielsweise Pseudomonas, Brevibacterium flavum oder lactoferum. Die Mikroorganismen können bei der katalysierten Anlagerung von Ammoniak an Fumarsäure auf einer festen Phase immobilisiert werden. Die Produktion von L-Asparaginsäure kann somit ökonomisch und kontinuierlich in einem durchströmten Reaktor oder Rohr durchgeführt werden, vgl. Ullmanns Encyclopädie der technischen Chemie, 1985, Band A2, Seite 68. L-Asparaginsäure kann auch beispielsweise durch chemische oder enzymatische Hydrolyse von L-Asparagin hergestellt werden. L-Asparagin fällt als Nebenprodukt in der Zuckermelasse und bei der Verarbeitung von Kartoffeln an. Zur Herstellung der Polykondensate wird vorzugsweise L- und DL-Asparaginsäure eingesetzt. Besonders bevorzugt dient biotechnologisch hergestellte L-Asparaginsäure als Ausgangsmaterial zur Herstellung der thermischen Polyaspartate.

Außer den Kondensaten, die durch alleinige thermische Kondensation von Asparaginsäure erhältlich sind, kann man auch Cokondensate der Asparaginsäure mit bis zu 40 mol% anderen α-Aminosäuren als Belagsverhinderer einsetzen. Geeignete andere α-Aminosäuren und deren Halbamide sind beispielsweise Asparagin, Isoasparagin, Glutaminsäure, Glutamin, Lysin, Arginin, Histidin, Glycin, Alanin, Valin, Leucin, Isoleucin, 4-Aminobuttersäure, 2-Aminoisobuttersäure, Hydroxyaminosäuren, wie Serin, Treonin oder N-(Hydroxyethyl)glycin und Iminosäuren, wie Prolin, aromatische und heterocyclische Aminosäuren, wie Phenylalanin, Tyrosin, Anthranilsäure oder Tryptophan, sowie Schwefel enthaltende Aminosäuren, wie beispielsweise Cystin, Cystein und Methionin. Außerdem eignen sich als andere Aminosäuren zur Herstellung der Cokondensate die Aminodicarbonsäuren wie Diaminobuttersäure oder N-Methylaminosäuren, beispielsweise Sarkosin oder N-Methylalanin. Sämtliche Aminosäuren können in der L- und D-Konfiguration oder in Form von Mischungen aus L- und D-Aminosäuren in beliebigen Mischungsverhältnissen und als Racemate eingesetzt werden. Bevorzugt ist jedoch die Verwendung von L-Asparaginsäure als alleiniges Ausgangsmaterial zur Herstellung der thermischen Polyasparaginsäure.

Die Kondensation von Asparaginsäure erfolgt durch Tempern der Asparaginsäurekristalle bei Temperaturen von 140 bis 260°C, bevorzugt bei 190 bis 240°C, innerhalb eines Zeitraums bis zu 50 Stunden. Das Tempern wird vorzugsweise im Vakuum oder unter Inertgasatmosphäre durchgeführt. Die Kondensationsreaktion kann jedoch auch unter erhöhtem Druck oder in einem Gasstrom, z.B. Kohlendioxid, Luft, Stickstoff oder überhitztem Wasserdampf durchgeführt werden. Die Zeiten für die Kondensation sind von den gewählten Reaktionsbedingungen abhängig; sie liegen im allgemeinen zwischen 10 Minuten und 50 Stunden. Zur technischen Herstellung der Polykondensate kann man beispielsweise ein Trockenband, einen Schaufeltrockner, einen Taumeltrockner oder einen Wirbelschichttrockner einsetzen. Polykondensate mit niedrigem Molgewicht können auch in einem druckdicht verschlossenen Gefäß hergestellt werden, indem man das bei der Kondensation entstehende Wasser nicht oder nur teilweise entfernt.

Bei der Polykondensation der Asparaginsäure und der Cokondensation von Asparaginsäure mit anderen α-Aminosäuren kann man auch von den Salzen der Asparaginsäure oder den Salzen der anderen Aminosäuren ausgehen, wenn man bei der Polykondensation zusätzlich anorganische Säuren mitverwendet. Die Kondensationstemperaturen können dann gegenüber der rein thermischen Polykondensation der Asparaginsäure gesenkt werden. Ein weiterer Vorteil besteht darin, daß man praktisch nicht gefärbte Polykondensate erhält. Bei Einsatz von Salzen der Asparaginsäure und anorganischen Säuren betragen die Kondensationstemperaturen 120 bis 260°C und liegen vorzugsweise in dem Bereich von 140 bis 220°C, während die Reaktionszeiten bei etwa 1 Minute bis zu 10 Stunden betragen.

Als anorganische Säuren können alle Halogenwasserstoffsäuren verwendet werden. Bevorzugt wird Chlorwasserstoffsäure eingesetzt. Die Halogenwasserstoffsäuren können gasförmig oder in flüssigem Zustand verwendet werden. Bevorzugt finden konzentrierte wäßrige Lösungen von Chlorwasserstoffsäure Anwendung, in denen Asparaginsäure unter Bildung von Asparaginsäure-Hydrochlorid löslich ist. Es kann aber auch flüssiger oder gasförmiger Chlorwasserstoff zur Herstellung der Hydrochloride verwendet werden. Die wäßrigen Lösungen des Asparaginsäure-Hydrochlorids werden zur Trockene eingedampft und der Rückstand durch Erhitzen auf Temperaturen in dem oben angegebenen Bereich polykondensiert. Zum kontinuierlichen Eindampfen der wäßrigen Salzsäurensalze der Asparaginsäure kann beispielsweise ein Sprühtrockner oder Sprühwirbelschichttrockner verwendet werden. Die Polykondensation der Hydrochloride kann direkt im Anschluß an das Eindampfen oder auch zu einem späteren Zeitpunkt erfolgen. Geeignete Apparaturen für die Kondensation sind alle diejenigen Vorrichtungen, bei denen Feststoffe in Vakuum oder in einem Gasstrom auf Temperaturen bis zu 260°C erhitzt werden können. Im Verlauf der Polykondensation tritt der Chlorwasserstoff aus dem Kondensationsprodukt wieder aus. Der freigesetzte Chlorwasserstoff kann zurückgewonnen und erneut mit Asparaginsäure umgesetzt werden.

Die Polykondensation der Asparaginsäure bzw. ihre Cokondensation mit den anderen in Betracht kommenden Säuren kann auch mit anorganischen Säuren des Phosphors in verschiedenen Oxidationsstufen durchgeführt werden. Als anorganische Säuren des Phosphors setzt man bevorzugt Phosphorsäure und polymere Anhydride der Phosphorsäure (Polyphosphorsäuren) ein. Als Phosphorsäure wird bevorzugt technische, 75 bis 85 %ige wäßrige ortho-Phosphorsäure eingesetzt. Man kann jedoch auch 100 %ige ortho-Phosphorsäure oder meta-Phosphorsäure verwenden. Von den polymeren Anhydriden der Polyphosphorsäure eignen sich beispielsweise Diphosphorsäure (Pyrophosphorsäure), Triphosphorsäure und höhere Homologe. Die Polykondensation kann auch mit einem Überschuß an Phosphor enthaltenden Säuren durchgeführt werden. Diese Maßnahme kann in solchen Fällen von Vorteil sein, in denen höhermolekulare Polyaspartimide sehr hochviskose Lösungen in Phosphorsäuren bilden. Überstöchiometrische Mengen an Phosphorsäure können in solchen Fällen als Löse- und Verdünnungsmittel die Viskosität der entstehenden Polymerlösungen herabsetzen.

Die Umsetzung mit den Phosphorsäuren geschieht in der Weise, daß man Asparaginsäure und gegebenenfalls andere Aminosäuren in Phosphorsäure bei 20°C aufschlämmt und im Vakuum auf eine Temperatur von etwa 160°C erwärmt. Das mit der Phosphorsäure gegebenenfalls eingebrachte Wasser destilliert dabei ab, gleichzeitig löst sich die Asparaginsäure in der Phosphorsäure auf. Man erhält eine homogene Schmelze eines Asparaginsäure-Phosphats, das durch Erhitzen auf Temperaturen in dem Bereich von 120 bis 260°C, vorzugsweise im Vakuum, thermisch polykondensiert wird. Mit fortschreitender Polykondensation nimmt die Viskosität der Reaktionsmischung zu. Das Ansteigen des Molekulargewichts kann an der Zunahme der Viskosität der Reaktionsmischung verfolgt werden. Durch vorzeitigen Abbruch der Polykondensationsreaktion, beispielsweise durch Eintragen des Reaktionsgemisches in Wasser, läßt sich das Molekulargewicht der Polykondensate begrenzen. Wenn man die Polykondensation bis zum Ende durchführt, so erhält man homogene, sehr hochviskose Lösungen von Polyaspartimiden in wasserfreier Phosphorsäure.

In analoger Weise erfolgt die Polykondensation der Asparaginsäure und ggf. der anderen Aminosäuren in Polyphosphorsäure. Polyphosphorsäuren entstehen durch Auflösen von Phosphorpentoxid in Phosphorsäure. Eine Aufschlämmung von kristalliner Asparaginsäure in Polyphosphorsäure wird auf eine Temperatur von 120 bis 260°C erwärmt. Hierbei geht zunächst die Asparaginsäure in Lösung. Diese Lösung wird anschließend - bevorzugt im Vakuum - getempert. Dabei erfolgt die Polykondensation der Asparaginsäure. Die Polykondensation der Asparaginsäure kann auch in Gegenwart von Derivaten der Phosphorsäure durchgeführt werden, z.B. Phosphoroxychlorid, Phosphoroxybromid, Phosphorpentachlorid und Phosphorpentoxid. Außerdem eignen sich Phosphorsäuren, in denen der Phosphor eine niedrigere Oxidationsstufe als +5 aufweist. Zu dieser Gruppe von Säuren gehört beispielsweise die phosphorige Säure, die, bezogen auf 1 Mol Asparaginsäure, in Mengen von 0,05 bis 0,3 Mol bei der Polykondensation eingesetzt wird. Phosphorige Säure kann jedoch auch in Kombination mit Phosphorsäure oder Chlorwasserstoffsäure angewendet werden. So hat sich beispielsweise die Kondensation von Asparaginsäure mit einer Mischung aus 1 Mol Phosphorsäure und 0,05 bis 0,1 Mol phosphoriger Säure pro 1 Mol Asparaginsäure als sehr vorteilhaft erwiesen. Man kann auch Mischungen aus 1 Mol Chlorwasserstoffsäure und 0,05 bis 0,1 Mol phosphoriger Säure pro 1 Mol Asparaginsäure bei der Polykondensation einsetzen. Außerdem eignen sich Derivate der phosphorigen Säure als Hilfsmittel bei der Kondensation, um die bei der Kondensation erforderliche Temperatur zu erniedrigen und die Reaktion zu beschleunigen. Außer der phosphorigen Säure können bei der Kondensation auch Phosphortrichlorid, Phosphortribromid, Triethylphosphit, Diethylchlorphosphit, Ethyldichlorphosphit oder Tetraethylpyrophosphit eingesetzt werden.

Eine weitere Möglichkeit besteht darin, Asparaginsäure in Gegenwart von unterphosphoriger Säure zu kondensieren. Die unterphosphorige Säure wird üblicherweise in Form wäßriger Lösungen verwendet. Pro 1 Mol Asparaginsäure verwendet man 0,05 bis 0,5 Mol unterphosphorige Säure. Die unterphosphorige Säure wird auf der Asparaginsäure homogen verteilt, indem man die Asparaginsäure zusammen mit unterphosphoriger Säure in Wasser löst und die Lösung eindampft. Die unterphosphorige Säure kann auch in Kombination mit Chlorwasserstoffsäure oder Phosphorsäure verwendet werden. Beispielsweise verwendet man eine Mischung aus 1 Mol Phosphorsäure und 0,05 bis 0,1 Mol unterphosphoriger Säure oder eine Mischung von 1 Mol Chlorwasserstoffsäure mit 0,05 bis 0,5 Mol unterphosphoriger Säure pro 1 Mol Asparaginsäure bei der Kondensation. Besonders bevorzugt ist die Herstellung der Kondensate durch Wasserabspaltung aus kristalliner L-Asparaginsäure bei Temperaturen von 180 bis 260°C und die Wasserabspaltung aus L-Asparaginsäure in phosphorsaurem Medium bei 130 bis 220°C.

Geeignete andere anorganische Säuren, die bei der Polykondensation der Asparaginsäure verwendet werden, sind beispielsweise Schwefelsäure, Dischwefelsäure, Schwefeltrioxid, Natrium- und Kaliumhydrogensulfat.

Bei der thermischen Polykondensation der Asparaginsäure fällt das Polykondensat in Form der wasserunlöslichen Polyasparaginsäureimide an. Die Polyaspartimide sind in Phosphorsäure und Dimethylformamid löslich. Sie haben in 1 %iger Lösung in Dimethylformamid K-Werte von 8 bis 70, vorzugsweise 10 bis 45. Die Polyaspartimide bzw. die Cokondensate der Asparaginsäure mit den anderen Aminosäuren können von den nicht umgesetzten Ausgangsstoffen beispielsweise dadurch gereinigt werden, daß man das Kondensationsprodukt zerkleinert und mit der 1- bis 10-fachen Menge an Wasser bei Temperaturen von 0 bis 100°C extrahiert. Dabei lösen sich die nicht umgesetzten Säuren heraus. Polyasparaginsäureimid bzw. die Cokondensate verbleiben als unlöslicher Rückstand. Nicht umgesetzte Asparaginsäure läßt sich durch Extraktion mit 1-N-Salzsäure leicht herauslösen.

Die nicht modifizierten Polyasparaginsäuren werden aus den Polyasparaginsäureimiden vorzugsweise dadurch erhalten, daß man die Polyaspartimide in Wasser aufschlämmt und bei Temperaturen im Bereich von 40 bis 90°C unter Zugabe von Base hydrolysiert und neutralisiert. Diese Reaktionen können selbstverständlich auch bei Temperaturen durchgeführt werden, die unterhalb und oberhalb des oben angegebenen Bereichs liegen. Geeignete Basen sind beispielsweise Natronlauge, Kalilauge, Soda, Kaliumcarbonat, Ammoniak und Amine, wie Trimethylamin, Diethylamin, Ethanolamin, Diethanolamin, Triethanolamin und Morpholin. Die Neutralisation kann auch mit Hilfe von Erdalkalimetallbasen erfolgen, z.B. Calciumhydroxid oder Bariumhydroxid. Die Behandlung der Polyaspartimide erfolgt vorzugsweise bei pH-Werten von 8 bis 10. Hydrolyse und Neutralisation können durch Einwirkung von Ultraschall auf die Reaktionspartner beschleunigt werden. Bei der Behandlung mit Basen erhält man teilweise oder vollständig neutralisierte Polyasparaginsäuren bzw. Kondensate, die mindestens 60 mol% Asparaginsäure und bis zu 40 mol% anderer Aminosäuren einkondensiert enthalten, in Form der Alkali- bzw. Ammoniumsalze. Die Polymeren haben K-Werte (bestimmt nach H. Fikentscher in 1 %iger wäßriger Lösung bei pH 7 und 25°C am Natriumsalz) von 5 bis 150 und vorzugsweise 10 bis 100. Insbesondere kommen solche Kondensate für den Einsatz als Belagsverhinderer bei der Eindampfung von Zukkersäften in Betracht, deren K-Wert 15 bis 80 beträgt.

Die Polyasparaginsäuren sind biologisch abbaubar nach OECD Guidelines for testing of chemicals (1981), 302 B (modifizierter Zahn-Wellens-Test). Sie sind auch abbaubar gemäß der Abnahme des gelösten Sauerstoffs im geschlossenen Flaschentest.

Die oben beschriebenen Polyasparate werden dem Zuckerdünnsaft in einer Menge von 0,1 bis 100, vorzugsweise 1 bis 50 ppm zugesetzt. Sie verhindern dabei die. Bildung von Ausfällungen bzw. wirken als Dispergiermittel, indem sie die Ausfällungen, die sich während des Eindampfens des Zuckerdünnsafts bilden, in feinverteilter Form dispergiert halten. In den Zuckersäften sind neben Zucker noch viele organische Zellinhaltsstoffe und gleichzeitig Calciumcarbonat, Calciumphosphat, Calciumsulfat, Calciumoxalat, Calciumsilikat, amorphem Silikat, und Zuckerzersetzungsstoffe noch enthalten. Die Konzentration der genannten Stoffe liegt in Zuckersäften wesentlich über denen in Boilerwasser und Kühlwasser. Der Einfluß der organischen Zuckerrübeninhaltsstoffe auf die Wirksamkeit von polymeren Additiven zur Belagsverhinderung beim Eindampfen von Zuckersäften ist daher nicht kalkulierbar.

Die K-Werte der neutralisierten Polykondensate wurden nach H. Fikentscher, Cellulosechemie, Band 13, 58 bis 64 und 71 bis 74 (1932) in wäßriger Lösung bei einer Temperatur von 25°C und einer Konzentration von 1 Gew.-% bei pH 7 am Natriumsalz der Polyasparaginsäuren bestimmt. Die K-Werte der Polyaspartimide wurden in 1 %iger Lösung in Dimethylformamid (DMF) bei 25°C bestimmt. Die %-Angaben in den Beispielen bedeuten Gew.-%.

### Beispiele

### Herstellung der Polykondensate

Die Polykondensation von Asparaginsäure wird - wie unter den einzelnen Polykondensaten näher angegeben - durchgeführt. Danach wird das Kondensationsprodukt folgendermaßen aufgearbeitet:

Das Reaktionsprodukt wird abgekühlt, zerkleinert und die zerkleinerte Reaktionsmasse mit jeweils 1 Liter 1-N-Salzsäure für 3 Stunden gerührt. Der unlösliche Rückstand wird dann mit Wasser und Aceton gewaschen und im Trockenschrank bei 50°C getrocknet. Die Ausbeuten der Kondensate sind berechnet auf die Bildung von Polyaspartimid.

Um aus den Polyaspartimiden wäßrige Natriumsalzlösungen der Polyasparaginsäure herzustellen, dispergiert man 1 g Polyaspartimid in 50 g Wasser, erwärmt die Mischung auf 60°C und fügt bei dieser Temperatur soviel einer 15 %igen wäßrigen Natronlauge zu, daß der pH-Wert in dem Bereich von 9 bis 10 liegt. Das in Wasser dispergierte Pulver löst sich allmählich zu einer klaren wäßrigen Lösung des Natriumsalzes der Polyasparaginsäure.

### Polykondensat 1

In einem Laborreaktor, der mit einem kräftigen mechanischem Rührwerk ausgestattet ist, werden 133 g (1 mol) L-Asparaginsäure mit 130 g 75 %iger Phosphorsäure unter guter Durchmischung 3 Stunden auf 170°C erhitzt. Wasser und andere flüchtige Komponenten werden im Vakuum aus dem Reaktionsgemisch abdestilliert und in einer Vorlage kondensiert. Die Asparaginsäure löst sich im Verlauf der Kondensation in der Reaktionsmischung auf. Man hält die homogene Reaktionsmischung auf 170°C und schaltet bei einem zu starken Anstieg der Viskosität des Gemisches den Rührer aus. Nach der oben beschriebenen Aufarbeitung erhält man 94 g (97 % d. Th.) Polyaspartimid mit einem K-Wert von 26,6. Das Natriumsalz der daraus erhältlichen Polyasparaginsäure besitzt einen K-Wert von 51,8.

### Polykondensat 2

In einem auf 230°C vorgeheizten Wärmeschrank werden 133 g (1 mol) L-Asparaginsäurekristalle in einer flachen Schale 4 Stunden bei 230°C im Vakuum getempert. Unter dem Mikroskop erkennt man, daß die Kristalle ihre regelmäßige Form verloren haben und in amorphe Feststoffe übergegangen sind, ohne geschmolzen zu sein. Das Pulver wird wie oben beschrieben aufgearbeitet. Der K-Wert in 1 %iger Lösung in DMF beträgt 16. Die wäßrige Na-Salzlösung besitzt in 1 %iger Lösung in Wasser einen K-Wert von 26,6.

Die oben beschriebenen Polykondensate wurden nach den im folgenden unter (a) - (c) beschriebenen Prüfmethoden untersucht. Die dabei erhaltenen Ergebnisse sind in der Tabelle aufgeführt.

### Prüfmethoden

### (a) CaSO₄-Inhibierung - statisch -

Dieser Test simuliert die Bildung von Calciumsulfatbelägen bei Aufkonzentrierung von Wasser. 500 ml einer gesättigten Gipslösung werden bei 100°C auf 200 ml eingedampft. Ausgefallenes CaSO₄ wird abfiltriert und im Filtrat Ca komplexometrisch bestimmt. Die Inhibitorwirkung wird berechnet aus der ausgefallenen Menge von Calciumsulfat im Blindversuch und in Anwesenheit des Belagsverhinderers.

### (b) Ca-Oxalat-Inhibierung - statisch -

Dieser Test simuliert die Bildung von Calciumoxalatbelägen (z. B. aus Zuckersaft). 100 ppm Calciumoxalat enthaltendes Wasser wird 2 h auf 100°C erhitzt. Nach Abkühlen wird im Filtrat Ca komplexometrisch bestimmt. Die Inhibitorwirkung wird aus der Menge von gelöstem Calciumoxalat im Blindversuch und bei Anwesenheit des Belagsverhinderers errechnet.

### (c) Ca-Trübungsverhalten

Dieser Test gibt Aufschluß darüber, ob der Belagsverhinderer empfindlich gegenüber hoher Ca-Härte im Zuckersaft ist. Hohe LD-Werte lassen erkennen, daß das Produkt während des Eindampfens nicht selbst als schwerlösliches Ca-Salz ausfällt und somit unwirksam wird.
Testwasser mit 40°d Ca-Härte, 3 g/l Kaliumchlorid wird mit dem Belagsverhinderer versetzt (z. B. 45 ppm Wirksubstanz), 30 Min. bei 100°C gehalten und anschließend sofort die Lichtdurchlässigkeit (LD) bei weißem Licht gemessen (Metrohm 662).

Die nachfolgende Tabelle enthält die nach diesen Prüfmethoden gemessenen Werte.

### (d) Siliciumdioxid Inhibierung (statisch)

500 ml Wasser enthaltend 500 ppm Siliciumdioxid, 300 ppm Calciumionen (als Calciumcarbonat) und 100 ppm Scale-Inhibitor werden 3 Stunden bei pH 8,2 am Rückfluß gekocht, über Nacht abgekühlt und über einen 0,45 Mikrometer Filter filtriert. Zu dem Filtrat wird über die Molybdämblaumethode der Anteil an gelöstem Siliciumdioxid bestimmt. Blindversuch ohne Inhibitor ergibt 150 ppm Siliciumdioxid.

**Tabelle**

| Bsp. | Polykondensat | K-Wert | Ca-sulfat Inhib. 2 ppm, (%) | Ca-oxalat Inhib. 50 ppm (%) | Ca Trübungsverhalten 45 ppm (%) | SiO₂ Inhib. (ppm) |
|---|---|---|---|---|---|---|
| 1 | 1 | 51,8 | 79 | 57 | 99,8 | 250 |
| 2 | 2 | 26,6 | 92 | 57 | 98,4 | 240 |
| Vgl. Bsp. 1 Poly Na-acrylat | | | | | | |
| | | 15 | 71 | 51 | 87 | 190 |

## Patentansprüche

1. Verwendung von Polyasparaginsäure und Kondensaten, die mindestens 60 mol.-% Asparaginsäure und bis zu 40 mol.-% andere Aminosäuren einkondensiert enthalten, sowie den Alkali- und Ammoniumsalzen der Polyasparaginsäure und der genannten Kondensate als Belagsverhinderer bei der Eindampfung von Zuckersäften.

2. Verwendung nach Anspruch 1, dadurch gekennzeichnet, daß man Poly-L-asparaginsäure oder Kondensate einsetzt, die durch Kondensation von L-Asparaginsäure mit anderen Aminosäuren erhältlich sind.

3. Verwendung nach Anspruch 1, dadurch gekennzeichnet, daß man Kondensate der D- oder der DL-Asparaginsäure einsetzt.

4. Verwendung nach Anspruch 1, dadurch gekennzeichnet, daß man Kondensate einsetzt, die durch Wasserabspaltung aus kristalliner L-Asparaginsäure bei Temperaturen von 180 bis 260°C erhältlich sind.

5. Verwendung nach Anspruch 1, dadurch gekennzeichnet, daß man Kondensate einsetzt, die durch Wasserabspaltung aus L-Asparaginsäuren in phosphorsaurem Medium bei 120 bis 250°C erhältlich sind.

## Claims

1. The use of polyaspartic acid and condensates which contain at least 60 mol% of aspartic acid and up to 40 mol% of other amino acids as condensed units, and of the alkali metal and ammonium salts of polyaspartic acid and of the said condensates to prevent deposits in the evaporation of sugar juices.

2. The use as claimed in claim 1, wherein poly-L-aspartic acid or condensates obtainable by condensation of L-aspartic acid with other amino acids are employed.

3. The use as claimed in claim 1, wherein condensates of D- or DL-aspartic acid are employed.

4. The use as claimed in claim 1, wherein condensates obtainable by elimination of water from crystalline L-aspartic acid at from 180 to 260°C are employed.

5. The use as claimed in claim 1, wherein condensates obtainable by elimination of water from L-aspartic acids in phosphoric acid medium at 120 to 250°C are employed.

## Revendications

1. Utilisation de poly(acide aspartique) et de produits de condensation qui contiennent à l'état condensé au moins 60% en moles d'acide aspartique et jusqu'à 40% en moles d'autres acides aminés, ainsi que des sels de métaux alcalins et d'ammonium du poly(acide aspartique) et desdits produits de condensation, comme agents anti-dépôt lors de la concentration par évaporation de jus de sucre.

2. Utilisation selon la revendication 1, caractérisée en ce que l'on utilise du poly(acide L-aspartique) ou des produits de condensation qui sont obtenus par condensation d'acide L-aspartique avec d'autres acides aminés.

3. Utilisation selon la revendication 1, caractérisée en ce l'on utilise des produits de condensation de l'acide D- ou DL-aspartique.

4. Utilisation selon la revendication 1, caractérisée en ce l'on utilise des produits de condensation qui sont obtenus par élimination d'eau à partir d'acide L-aspartique cristallin, à une température de 180 à 260°C.

5. Utilisation selon la revendication 1, caractérisée en ce l'on utilise des produits de condensation qui sont obtenus par élimination d'eau à partir d'acides L-aspartiques dans un milieu d'acide phosphorique, à une température de 120 à 250°C.
